(19) Europäisches Patentamt
European Patent Office
Office européen des brevets

(11) Numéro de publication: 0 139 597 B1

# (12) FASCICULE DE BREVET EUROPEEN

(45) Date de publication du fascicule du brevet: **27.01.88**

(51) Int. Cl.⁴: **D 21 H 3/28**, C 08 L 3/08, C 08 B 31/12

(21) Numéro de dépôt: **84402172.5**

(22) Date de dépôt: **29.10.84**

(54) **Additif cationique pour la fabrication du papier.**

(30) Priorité: **27.10.83 FR 8317186**

(43) Date de publication de la demande: **02.05.85 Bulletin 85/18**

(45) Mention de la délivrance du brevet: **27.01.88 Bulletin 88/4**

(84) Etats contractants désignés: **AT BE CH DE GB IT LI NL SE**

(56) Documents cités:
**DE - B - 1 161 220**
**FR - A - 1 194 605**
**FR - A - 2 370 772**

**TAPPI J. TECHN. ASS. PULP PAPER IND., volume 61, no. 9, septembre 1978, pages 59-61, (ATLANTA, GA, US); G.E. HAMERSTRAND et al.: "Dry processed cationic starches and flours. Performance in kraft bag and filled bond paper"**

(73) Titulaire: **Roquette Frères, F-62136 Lestrem (FR)**

(72) Inventeur: **Huchette, Michel, 63, rue du Maréchal Joffre, F-59660 Merville (FR)**
Inventeur: **Fleche, Guy, 49, rue Georges Charlet "Le Sart", F-59660 Merville (FR)**
Inventeur: **Gosset, Serge, 393 Chemin du Paradis, F-62136 Lestrem (FR)**

(74) Mandataire: **Koch, Gustave et al, Cabinet PLASSERAUD 84, rue d'Amsterdam, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 139 597 B1

ACTORUM AG

**Description**

L'invention a pour objet un nouvel additif cationique de masse pour la fabrication du papier. Elle vise également le procédé de préparation de cet additif, le procédé de préparation du papier mettant en œuvre cet additif ainsi que le papier ainsi obtenu.

L'utilisation d'amidons cationiques dans la fabrication du papier est connue depuis longtemps. L'emploi de ces amidons permet essentiellement d'augmenter la rétention des fibres et des charges, d'améliorer l'égouttage et d'augmenter les caractéristiques physiques du papier.

Ces amidons cationiques sont préparés par réaction de la molécule d'amidon avec des réactifs permettant l'apparition d'une charge positive. La liaison chimique peut être du type éther ou du type ester, mais généralement la liaison éther est préférée étant donné sa meilleure stabilité.

La plupart des amidons cationiques commercialisés à l'heure actuelle sont préparés à l'aide de réactifs contenant de l'azote. Le réactif utilisé peut être à base d'une amine primaire, secondaire ou tertiaire ou d'un sel d'ammonium quaternaire. Les amines primaire et secondaire sont cependant considérées comme présentant peu d'intérêt pour les applications papetières et ce sont donc essentiellement les amines tertiaires et les sels d'ammonium quaternaire qui sont utilisés.

Des réactifs typiques de cationisation de l'amidon sont des halohydrines ou des époxydes répondant aux formules suivantes:

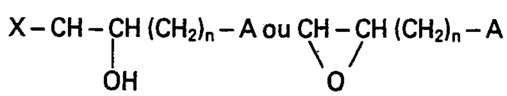

où A représente les groupements

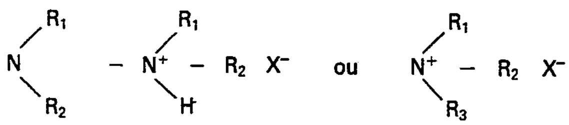

où X représente un atome d'halogène où $R_1$ et $R_2$ représentent chacun indépendamment de l'autre un radical alkyle à chaîne droite ou ramifiée en $C_1$–$C_4$ ou bien sont réunis en une structure cyclique, où $R_3$ représente un radical alkyle à chaîne droite ou ramifiée en $C_1$–$C_4$, et où n représente un nombre de 1 à 3.

Les amidons cationiques peuvent être parfois également «amphotérisés» par introduction sur l'amidon de substituants anioniques, une telle amphotérisation étant réputée diminuer la sensibilité au pH.

Les groupements anioniques les plus utilisés sont présents sous la forme de groupes phosphate ou phosphonate.

La réaction de cationisation de l'amidon peut être effectuée soit en phase aqueuse, l'amidon étant sous forme granulaire ou sous forme gélatinisée ou en phase sèche. De façon générale, la réaction est conduite en phase aqueuse en présence d'agents alcalins, l'amidon étant sous forme granulaire. L'amidon cationique obtenu selon ce procédé doit ensuite subir une opération de cuisson – généralement dans un cuiseur continu pression qui assure le dosage, la cuisson et la dilution – avant d'être envoyé sur la machine à papier.

La cationisation a été effectuée et décrite en rapport avec des amidons de toute provenance tels que ceux de maïs, de maïs cireux, riz, blé, pomme de terre, manioc. Des différences de comportement plus ou moins sensibles, en fonction notamment des pâtes cellulosiques et des milieux aqueux utilisés, ont pu être observées mais c'est généralement la fécule de pomme de terre cationique qui est reconnue comme apportant les meilleures performances, les amidons de céréales cationiques présentant généralement des performances légèrement moins élevées.

Les recherches menées par la Société Demanderesse lui ont permis de trouver que des résultats encore meilleurs, notamment du point de vue de la rétention, pouvaient être atteints.

Elle a constaté en effet que, de façon surprenante et inattendue, le mélange d'au moins un amidon de céréale et d'au moins un amidon de tubercule cationiques présentait des performances en tant qu'additif dans la fabrication du papier supérieures à celles d'une quantité équivalente d'amidon de céréale cationique ou d'amidon de tubercule cationique, pris isolément.

Il s'ensuit que le nouvel additif cationique de masse pour la fabrication du papier, conforme à l'invention, est caractérisé par le fait qu'il comprend un mélange d'au moins un amidon de céréale et d'au moins un amidon de tubercule cationiques présentant un taux d'azote fixé supérieur à 0,10%, de préference à 0,15%, sur amidon sec, la teneur du mélange en amidon de céréale cationique étant par ailleurs comprise entre 2 et 98% en poids, ce grâce à quoi la synergie apparaissant entre les amidons de céréales cationiques et les amidons de tubercules cationiques est obtenue. De préference, la teneur en amidon de céréale cationique dans le mélange est comprise entre 5% et 95% et, de préference, entre 10% et 90%.

A l'intérieur des susdites limites, les performances de la composition comprenant l'amidon de céréales et l'amidon de tubercules cationiques, telles que mesurées par exemple à l'aide du test de rétention dynamique «BRITT-JAR» (dont il sera question ci-après), sont supérieures à celles auxquelles on pouvait s'attendre par simple addition des performances individuelles des amidons de céréales cationiques et des amidons de tubercules cationiques.

La teneur optimale en amidons de céréales de l'additif cationique conforme à l'invention, c'est-à-dire celle permettant d'obtenir les meilleures performances, est déterminée à l'intérieur des limites indiquées, en fonction notamment de la pâte cellulosique utilisée, du milieu aqueux employé (environnement ionique) ou des caractéristiques propres à chaque machine à papier.

Afin de préparer le nouvel additif cationique de masse pour la fabrication du papier conforme à l'invention, on cationise un mélange d'au moins un amidon de céréale et d'au moins un amidon de tubercule, les taux de réactif mis en œuvre étant choisis de telle sorte que les amidons cationiques résultants présentent un taux d'azote fixé supérieur à 0,10% et, de préférence, supérieur à 0,15%, sur amidon sec, la teneur du mélange résultant en amidon de céréale cationique étant par ailleurs comprise entre 2 et 98% en poids.

Dans la pratique, les taux de réactif mis en œuvre sont tels que la limite supérieure du taux d'azote fixé est voisine de 1%.

De préférence, cependant, on cationise séparément les amidons de tubercules, d'une part, et les amidons de céréales, d'autre part, de telle sorte que le taux d'azote fixé soit supérieur à 0,10%, de préférence à 0,15%, sur amidon sec, et que l'on réunit ensuite ces deux types d'amidons cationiques soit par mélange à sec, soit en phase lait, soit par mélange des colles aqueuses concentrées ou diluées préparées à partir de ces amidons cationiques.

Enfin, le procédé de fabrication du papier conforme à l'invention est caractérisé, quant à lui, par le fait que l'on ajoute à la pâte cellulosique destinée à la fabrication du papier une proportion de 0,1% à 4% de l'additif cationique selon l'invention, ce pourcentage étant exprimé en additif sec par rapport à la production massique de papier, l'additif cationique étant introduit sous forme de colle aqueuse diluée, de concentration inférieure à 2% et, de préférence, inférieure à 1%.

L'invention vise encore d'autres caractéristiques qui s'utilisent de préférence en même temps et dont il sera plus explicitement question ci-après..

Et elle pourra, de toute façon, être bien comprise à l'aide du complément de description qui suit et des exemples.

Se proposant donc de fabriquer l'additif cationique de masse conforme à l'invention, on s'y prend comme suit ou de manière équivalente.

On réalise le mélange d'au moins un amidon de céréale, de préférence choisi parmi les amidons de blé et de maïs, et d'au moins un amidon de tubercule, de préférence la fécule de pomme de terre, et l'on effectue la réaction de cationisation sur ce mélange.

De préférence, cependant, on procède à la cationisation séparée des amidons de tubercules, d'une part, et des amidons de céréales, d'autre part, le mélange des deux types d'amidons cationiques ainsi obtenus étant ensuite réalisé soit par mélange à sec, soit en phase lait, soit par mélange des colles aqueuses concentrées ou diluées préparées à partir de ces amidons cationiques.

La proportion d'amidon de tubercule présente dans le mélange est choisie comprise entre 2 et 98% en poids, de préférence entre 5% et 95% et, plus préférentiellement encore, entre 10 et 90%, afin d'obtenir l'effet de synergie recherché, mais comme mentionné précédemment, cette proportion pourra être optimisée à l'intérieur de ces limites, ainsi qu'il ressort des exemples, en fonction notamment de la pâte cellulosique utilisée, du milieu aqueux employé et des caractéristiques de la machine à papier sur laquelle est faite l'application.

La réaction de cationisation peut être effectuée de manière connue en soi, à l'aide de réactifs cationiques tels que décrits par exemple dans «Starch Chemistry and Technology – Volume II – chapter XVI – R.L. Whistler and E.F. Paschall – Academic Press (1967)». La réaction peut être conduite en phase aqueuse, l'amidon étant sous forme granulaire ou sous forme gélatinisée, ou en phase sèche, les conditions de température, de temps et de catalyse étant bien connues de tout homme de l'art.

De préférence cependant, la réaction de cationisation est effectuée en phase aqueuse, l'amidon étant sous forme granulaire, en milieu alcalin et avec des réactifs azotés à base d'amines tertiaires ou de sels d'ammonium quaternaires. Parmi ces réactifs, on préfère utiliser les chlorhydrates de 2-dialkylaminochloréthane tels que le chlorhydrate de 2-diéthylaminochloréthane ou les halogénures de glycidyl-triméthylammonium et leurs halohydrines, tels que le chlorure de N-(3-chloro-2-hydroxypropyl)-triméthylammonium, ce dernier réactif étant préféré.

Les amidons cationiques, et spécialement les amidons de céréale, peuvent également être amphotérisés, ceci afin notamment d'améliorer leurs performances en milieu acide.

Enfin, en ce qui concerne la préparation de la colle d'additif cationique conforme à l'invention, celle-ci peut être réalisée, de manière connue en soi, par cuisson discontinue ou continue, par exemple dans un cuiseur continu sous pression propre à assurer les opérations de dosage, de cuisson et de dilution.

Les exemples suivants permettent de mieux expliciter l'invention.

Méthode d'évaluation des performances des produits cationiques

Afin d'évaluer les performances des différents amidons cationiques utilisés ainsi que des additifs cationiques conformes à l'invention, la méthode dite «DYNAMIC RETENTION JAR» mettant en œuvre le dispositif connu sous la dénomination «BRITT-JAR», a été utilisée.

La pâte à papier est une suspension aqueuse de fibres de cellulose de différentes dimensions, souvent mélangées à d'autres particules telles que les charges pigmentaires. L'eau peut également contenir d'autres substances dissoutes, présentes naturellement ou ajoutées pour modifier la composition de la pâte.

Les propriétés colloïdales ou la stabilité hydrodyamique de la préparation ont d'importantes répercussions sur la fabrication du papier, par exemple, sur la rétention des fines de cellulose et de la charge lors de la confection de la feuille et sur la vitesse d'égouttage de l'eau à travers la feuille. L'uniformité de la distribution des fibres dans la feuille et la distribution des fines sont

également affectées. Sur la machine à papier, la formation de la feuille se fait sous certaines conditions d'agitation provoquant un fauchage mécanique intense, ayant tendance à entraîner les fines particules à travers la toile, dans les eaux sous toile. Il en résulte que les méthodes de fabrication de papier couramment utilisées en laboratoire où l'agitation est faible ou délibérément absente, ne permettent pas de prévoir le comportement sur la machine à papier industrielle.

Le dispositif dynamique BRITT-JAR permet d'étudier la pâte à papier au niveau laboratoire dans des conditions d'agitation contrôlées et variables, plus représentatives des conditions industrielles.

Pour la description et le mode d'utilisation de cet appareil, on peut se reporter aux publications suivantes:

TAPPI, Octobre 1983, volume 56, N° 10, p. 46–50,
TAPPI, Février 1976, volume 59, N° 2, p. 67–70,
TAPPI, Juillet 1977, volume 60, N° 7, p. 110–112,
TAPPI, Novembre 1978, volume 61, N° 11, p. 108–110.

Exemple 1

Pour une première série d'essais, on a prélevé, sur une machine industrielle, une pâte de type dit milieu acide, dont les caractéristiques étaient les suivantes:

| | |
|---|---|
| Concentration de la pâte en matières fibreuses (obtenue par filtration) | 8,02 g/kg |
| Acidité | 120 ppm |
| Résistivité de la suspension | 952 ohms |
| Solubles | 1,1 g/l |
| Cendres | 1,75 g/l |

L'acidité a été mesurée en effectuant un dosage simple à partir d'une solution sodique N/10 avec, pour indicateur coloré, la phénolphtaléine.

Ont été étudiés, d'une part, une fécule de pomme de terre cationique présentant un taux d'azote fixé sur sec égal à 0,23% et, d'autre part, un amidon de blé cationique présentant un taux d'azote fixé sur sec égal à 0,20%, ces produits ayant été préparés par cationisation séparée, en phase aqueuse granulaire, en milieu alcalin et par réaction avec le chlorure de N-(3-chloro-2-hydroxypropyl)-triméthylammonium (dénommé ci-après CHTA).

Ont également été considérés deux additifs cationiques conformes à l'invention, préparés par mélange à sec:

de 50% de fécule cationique et de 50% d'amidon de blé cationique,
de 25% de fécule cationique et de 75% d'amidon de blé cationique.

Chacun de ces produits a été solubilisé sur un appareil de cuisson en continu, dans les conditions suivantes:

lait à 10% de matière commerciale,
température: 120 °C, sous une pression suffisante pour que la cuisson ait lieu en phase liquide,
temps de maintien: 30 secondes,
dilution en ligne à une concentration de 2% de matières sèches, mesurée au réfractomètre, par de l'eau froide, le produit résultant se trouvant ainsi amené à 40 °C.

Les viscosités «BROOKFIELD», mesurées à l'aide de la broche n° 2, après passage dans une pompe centrifuge permettant de reproduire les conditions de distribution sur machine à papier, sont réunies dans le tableau I ci-après.

Dans ce tableau ainsi que dans les tableaux III et V, les viscosités sont exprimées en centipoises. Pour obtenir les valeurs correspondantes dans le système S.I. (c'est-à-dire en Pa.s), il fussit de multiplier les valeurs obtenues par $10^{-3}$.

Tableau I

| | 40 °C | | 25 °C | |
|---|---|---|---|---|
| | 20 t/min | 100 t/min | 20 t/min | 100 t/min |
| Fécule cationique | 30 cp | 44 cp | 36 cp | 52 cp |
| Amidon de blé cationique | 80 cp | 50 cp | 70 cp | 66 cp |
| Mélange 50–50 | 48 cp | 52 cp | 60 cp | 64 cp |
| Mélange 25–75 | 60 cp | 50 cp | 66 cp | 66 cp |

La mise en œuvre, pour les tests BRITT-JAR, a été réalisée à raison de 0,25% de produit cationique sec par rapport à la teneur en matières sèches de la pâte.

L'agitateur utilisé dans l'appareil BRITT-JAR a été soumis à trois vitesses de rotation différentes: 500 tours/min, 750 tours/min et 1000 tours/min.

Dans ces différentes conditions, la rétention des particules fines a été mesurée (exprimée en pour cent par rapport au taux de fines initial qui était de 19,6% dans le cas présent) et les résultats sont réunis dans le tableau II.

Tableau II

| | RETENTION SUR BRITT-JAR | | |
|---|---|---|---|
| | 500 t/min | 750 t/min | 1000 t/min |
| Fécule cationique | 39,7 | 24,4 | 19,8 |
| Amidon de blé cationique | 32,8 | 21,5 | 16,7 |
| Mélange 50–50 | 35,9 | 24,2 | 18 |
| Mélange 25–75 | 40,9 | 24,3 | 19,7 |

Les résultats réunis dans ce tableau sont illustrés par la fig. 1, sur laquelle on a représenté la variation de la rétention (en %) en fonction de la teneur du mélange en amidon de blé cationique pour des vitesses de 500 t/min (courbe $C_1$), de 750 t/min (courbe $C_2$) et 1000 t/min (courbe $C_3$), les valeurs numériques utilisées étant celles du tableau II.

Le mélange à 25% de fécule cationique et de 75% d'amidon de blé cationique apparaît particulièrement intéressant et met en évidence la synergie dont il a été question.

Exemple 2

Une autre pâte industrielle, également du type «milieu acide» a été utilisée dans cet exemple.

Ses différentes caractéristiques sont:

| | |
|---|---|
| solubles | 1,20 g/l |
| cendres | 1,95 g/l |
| résistivité | 832 ohms |
| pH | 4,2 |
| acidité | 105 ppm |
| taux de fines (sans agent) | 21,2% |
| concentration matières fibreuses | 8,52 g/kg |

On utilise pour les essais:

une fécule cationique présentant un taux d'azote fixé sur sec de 0,25%

un amidon de maïs cationique présentant un taux d'azote fixé sur sec de 0,23%

ces deux amidons ayant été préparés par cationisation séparée, en phase aqueuse granulaire, à l'aide de CHTA.

Les additifs cationiques suivants ont ensuite été préparés par mélange de ces deux amidons cationiques:

90% fécule cationique + 10% amidon de maïs cationique

75% fécule cationique + 25% amidon de maïs cationique

50% fécule cationique + 50% amidon de maïs cationique

25% fécule cationique + 75% amidon de maïs cationique

10% fécule cationique + 90% amidon de maïs cationique

Les divers produits obtenus ont été introduits sous forme de lait à 10% de matière commerciale et traités dans un appareil de cuisson en continu pendant 30 sec à 120 °C.

A la sortie du cuiseur, on procède à une dilution par de l'eau froide, pour amener la colle obtenue à 2% de matière sèche mesurée au réfractomètre et à 40 °C environ.

La solution colloidale ainsi obtenue est soumise ensuite à un passage en pompe centrifuge de façon à reproduire les conditions de distribution sur machine à papier, génératrices de fauchage mécanique de la colle.

Les viscosités BROOKFIELD (broche n° 2), après ces traitements sont réunies dans le tableau III.

Tableau III

| | 40 °C | | 25 °C | |
|---|---|---|---|---|
| | 20 t/min | 100 t/min | 20 t/min | 100 t/min |
| F | 30 cp | 48 cp | 40 cp | 60 cp |
| AM | 76 cp | 60 cp | 110 cp | 76 cp |
| 90 F 10 AM | 32 cp | 52 cp | 50 cp | 62 cp |
| 75 F 25 AM | 30 cp | 48 cp | 44 cp | 58 cp |
| 50 F 50 AM | 34 cp | 48 cp | 50 cp | 58 cp |
| 25 F 75 AM | 38 cp | 44 cp | 46 cp | 76 cp |
| 10 F 90 AM | 56 cp | 56 cp | 80 cp | 68 cp |

F: fécule de pomme de terre cationique
AM: amidon de maïs cationique.

Les différents produits, sous forme de colle diluée, ont été ajoutés à un taux de 0,25% de produit sec par rapport à la matière sèche de la pâte.

La rétention des fines sur appareil dynamique BRITT-JARr a été mesurée sous trois vitesses d'agitation: 500, 750 et 1000 tours/min.

Les résultats sont réunis dans le tableau IV ci-après.

Tableau IV

| | RETENTION BRITT-JAR | | |
|---|---|---|---|
| | 500 t/min | 750 t/min | 1000 t/min |
| Fécule cationique | 48 | 34,2 | 24,4 |
| Amidon de maïs cationique | 46,4 | 34,8 | 29,1 |
| 90% F 10% AM | 49,2 | 35,8 | 30,4 |
| 75% F 25% AM | 48,8 | 39,3 | 33,9 |
| 50% F 50% AM | 49 | 36,6 | 34,8 |
| 25% F 75% AM | 50,4 | 36,9 | 34,1 |
| 10% F 90% AM | 46,5 | 32,3 | 30,1 |
| Pâte sans agent de rétention | 38,8 | 27,1 | 20,3 |

Les résultats réunis dans ce tableau sont illustrés par la fig. 2 sur laquelle les courbes $C_4$, $C_5$ et $C_6$ représentent respectivement la variation de la rétention (en %) en fonction de la teneur en amidon de maïs cationique pour les vitesses de 500, 750 et 1000 tours/min.

La synergie est particulièrement nette à 1000 tours/min, mais existe aussi à 500 et 750 tours/min.

On constate donc qu'il est possible d'améliorer

très sensiblement la rétention des fines par utilisation des additifs cationiques selon l'invention.

Exemple 3

Les pâtes dites de milieu neutre, c'est-à-dire chargées essentiellement en carbonate de calcium, ont pris une importance certaine dans l'industrie papetière.

Nombreux sont les cas de mise en œuvre de matière amylacée cationique dans une pâte sans sulfate d'alumine, avec des pH compris entre 7 et 8,5.

C'est pourquoi on a également étudié une pâte de ce type avec les mêmes produits que ceux utilisés dans les exemples 1 et 2.

La préparation des colles a été réalisée, comme précédemment, pendant 30 sec à 120 °C sur un lait à 10% de matière commerciale, avec dilution en ligne de façon à amener la colle à 2% de matières sèches et 40 °C environ. Les colles ainsi obtenues ont été soumises à un passage en pompe centrifuge avant d'être ajoutées à la pâte.

Les valeurs des viscosités BROOKFIELD (broche n° 2) sont réunies dans le tableau V.

Tableau V

| | 40 °C | | 25 °C | |
|---|---|---|---|---|
| | 20 t/min | 100 t/min | 20 t/min | 100 t/min |
| Fécule cationique | 26 cp | 44 cp | 35 cp | 52 cp |
| Amidon de maïs cationique | 160 cp | 84 cp | 180 cp | 96 cp |
| 90 F 10 AM | 30 cp | 44 cp | 40 cp | 52 cp |
| 75 F 25 AM | 40 cp | 52 cp | 50 cp | 60 cp |
| 50 F 50 AM | 34 cp | 48 cp | 54 cp | 58 cp |
| 25 F 75 AM | 52 cp | 56 cp | 60 cp | 60 cp |
| 10 F 90 AM | 90 cp | 60 cp | 120 cp | 80 cp |

La pâte elle-même présentait les caractéristiques suivantes:

| | |
|---|---|
| solubles | 0,82 g/l |
| résistivité | 2640 ohms |
| pH | 7 |
| cendres | 1,82 |
| concentration matières fibreuses | 8,24 g/kg |
| taux de fines | 27,2% |

Les différents produits cationiques ont été ajoutés à raison de 0,25% de matière sèche par rapport à la matière sèche de la pâte.

Les résultats obtenus sont réunis dans le tableau VI ainsi que dans la fig. 3.

Tableau VI

| | RETENTION BRITT-JAR (%) | | |
|---|---|---|---|
| | 500 t/min | 750 t/min | 1000 t/min |
| Fécule cationique | 46,7 | 21,9 | 15,5 |
| Amidon de maïs cationique | 46,2 | 21,8 | 15,6 |
| 90% F 10% AM | 51,7 | 25,3 | 17,7 |
| 75% F 25% AM | 48,5 | 25,2 | 15,1 |
| 50% F 50% AM | 45,1 | 24,5 | 14,3 |
| 25% F 75% AM | 46,9 | 25,3 | 17,8 |
| 10% F 90% AM | 44,2 | 24,1 | 19 |
| Pâte seule | 29 | 14,5 | 3,4 |

Les résultats réunis dans ce tableau sont illustrés par la fig. 3 dans laquelle les courbes $C_7$, $C_8$ et $C_9$ représentent respectivement la variation de la rétention (en %) en fonction de la teneur en amidon de maïs cationique pour les vitesses de 500, 750 et 1000 tours/min.

L'examen du tableau VI et de la fig. 3 montre que la synergie existe également en milieu neutre. Les pourcentages les plus favorables sont variables en fonction de la vitesse de rotation. A 500 tours/min, les performances optimales sont obtenues avec l'additif constitué de 90% de fécule cationique et de 10% d'amidon de maïs cationique.

A 750 tours/min, on observe l'excistence d'un plateau entre 90–10 et 25–75.

A 1000 tours/min, l'optimum se situe aux alentours du point 10% de fécule – 90% d'amidon de maïs.

Exemple 4

Cet exemple établit une comparaison entre la cationisation séparée des amidons de tubercules et des amidons de céréales et la cationisation effectuée sur le mélange des deux types d'amidons.

Le réactif de cationisation utilisé est le même qu'aux exemples précédents et la réaction est toujours effectuée en phase aqueuse et en milieu alcalin, les produits amylacés étant sous forme granulaire.

Par cationisation séparée, on a obtenu une fécule de pomme de terre cationique présentant un taux d'azote fixé sur sec égal à 0,25% et un amidon de maïs cationique présentant un taux d'azote fixé sur sec égal à 0,22%.

Ces deux amidons cationiques ont ensuite été mélangés à raison de 25 parties en poids de fécule cationique et 25 parties en poids l'amidon de maïs cationique. Le taux d'azote de l'additif cationique ainsi obtenu était de 0,23%.

Parallèlement, on a procédé à la cationisation d'un mélange de 25 parties en poids de fécule de pomme de terre et de 75 parties en poids d'amidon de maïs. Le taux d'azote fixé sur sec obtenu est égal à 0,22%.

Les deux additifs cationiques ainsi préparés ont alors été comparés au niveau de leurs performances.

Pour cela, les préparations des colles ont été conduites comme dans les exemples précédents: lait à 10% de matière commerciale, cuisson à 120 °C pendant 30 secondes, dilution en ligne à 2% de matières sèches et passage en pompe centrifuge.

Les viscosités mesurées après ce traitement au viscosimètre BROOKFIELD (broche n° 2) sont réunis dans le tableau VII.

Tableau VII

| | 40 °C | | 25 °C | |
|---|---|---|---|---|
| | 20 t/min | 100 t/min | 20 t/min | 100 t/min |
| 25 F – 75 AM cat. séparées | 42 | 50 | 100 | 52 |
| 25 F – 75 AM cat en mélange | 48 | 52 | 100 | 64 |

Les colles obtenues ont alors été ajoutées à une suspension fibreuse prélevée sur une machine industrielle. Cette pâte était de type dit en milieu neutre, chargée au carbonate de calcium et ne comportait pas de sulfate d'alumine.

Ses caractéristiques étaient les suivantes:

| | |
|---|---|
| solubles | 0,67 g/l |
| résistivité | 2730 ohms |
| pH | 7,3 |
| cendres | 2,15 g/l |
| concentration matières fibreuses | 8,27 g/l |
| taux de fines | 28,8% |

Les quantités introduites correspondaient à 0,25% de matière amylacée cationique sèche par rapport à la matière sèche de la pâte.

L'appareil BRITT-JAR a ensuite été utilisé comme dans les exemples précédents.

Les résultats sont présentés dans le tableau VIII.

Tableau VIII

| | RETENTION SUR BRITT-JAR (%) | | |
|---|---|---|---|
| | 500 t/min | 750 t/min | 1000 t/min |
| 25 F – 75 AM cat. séparées | 49,3 | 28,1 | 19 |
| 25 F – 75 AM cat. en mélange | 49,6 | 27,3 | 21,4 |
| Pâte seule | 16,2 | 6,1 | 1 |

Dans ce cas et notamment avec la pâte cellulosique utilisée, on observe très peu de différences au niveau des performances entre l'additif cationique préparé par cationisation séparée et celui préparé par cationisation sur mélange.

Les performances de ces additifs sont cependant très supérieures à celles de la fécule cationique seule qui donne des pourcentages de rétention respectivement égaux à 42,7%, 26,6% et 14,6% pour les vitesses de 500, 750 et 1000 tours/min.

Exemple 5

Les produits cationiques sont ceux de l'exemple 4.

La pâte est une pâte prélevée en milieu industriel; les caractéristiques en sont les suivantes:

| | |
|---|---|
| solubles | 1,10 g/l |
| résistivité | 910 ohms |
| pH | 7 |
| cendres | 2,40 g/l |
| concentration en matières fibreuses | 8,17 g/kg |
| taux de fines | 23,8% |

Le taux d'introduction est de 0,25% de produit cationique sec par rapport à la matière sèche de la pâte.

Les résultats des tests de rétention sont présentés dans le tableau IX.

Tableau IX

| | RETENTION BRITT-JAR (%) | | |
|---|---|---|---|
| | 500 t/min | 750 t/min | 1000 t/min |
| 25 F – 75 AM cat. séparées | 47,6 | 21,7 | 18,5 |
| 25 F – 75 AM cat. en mélange | 48,7 | 18,3 | 10,8 |
| Pâte seule | 29 | 12,4 | 7,6 |

Contrairement à l'exemple précédent, on note dans ce cas une supériorité de performances pour l'additif préparé par cationisation séparée, tout particulièrement à la vitesse de 1000 tours/min.

Comme il va de soi et comme il résulte d'ailleurs déjà de ce qui précède, l'invention ne se limite nullement à ceux de ses modes d'application et de réalisation qui ont été plus particulièrement envisagés; elle en embrasse, au contraire, toutes les variantes.

## Revendications

1. Additif cationique de masse pour la fabrication du papier, caractérisé par le fait qu'il comprend un mélange d'au moins un amidon de céréale et d'au moins un amidon de tubercule cationiques présentant un taux d'azote fixé supérieur à 0,10%, de préférence à 0,15%, sur amidon sec, la teneur du mélange en amidon de céréale cationique étant par ailleurs comprise entre 2 et 98% en poids.

2. Additif cationique de masse selon la revendication 1, caractérisé par le fait que la proportion d'amidon de céréale dans le mélange est comprise entre 5% et 95% et, de préférence, entre 10 et 90%.

3. Additif cationique de masse selon l'une quelconque des revendications 1 et 2, caractérisé par le fait que l'amidon de céréale est choisi parmi les amidons de blé ou de maïs et que l'amidon de tubercule est constitué par de la fécule de pomme de terre.

4. Additif cationique de masse selon l'une des revendications 1 à 3, caractérisé par le fait que les amidons ont été cationisés à l'aide de réactifs azotés à base d'amines primaires ou de sels d'ammonium quaternaires.

5. Procédé de fabrication d'un additif cationique de masse pour la fabrication du papier, caractérisé par le fait que l'on cationise un mélange d'au moins un amidon de céréale et d'au moins un amidon de tubercule, ces taux de réactif étant choisis de telle sorte que les amidons cationiques résultants présentent un taux d'azote fixé supérieur à 0,10%, de préférence à 0,15%, sur amidon sec, la teneur du mélange résultant en amidon de céréale cationique étant par ailleurs comprise entre 2 et 98% en poids.

6. Procédé selon la revendication 5, caractérisé par le fait que la limite supérieure du taux d'azote fixé est voisine de 1%.

7. Procédé de fabrication d'un additif cationique de masse pour la fabrication du papier, caractérisé par le fait que l'on cationise séparément au moins un amidon de tubercule, d'une part, et au moins un amidon de céréale, d'autre part, de telle sorte que le taux d'azote fixé soit supérieur à 0,10%, de préférence à 0,15%, sur amidon sec, et que l'on réunit ces deux types d'amidons cationiques soit par mélange à sec, soit par mélange en phase lait, soit par mélange des colles aqueuses concentrées ou diluées obtenues à partir de ces amidons cationiques en des proportions telles que l'amidon cationique de céréale représente de 2 à 98% du mélange.

8. Procédé de fabrication du papier, caractérisé par le fait que l'on ajoute à la pâte cellulosique une proportion de 0,1% à 4% de l'additif cationique de masse selon l'une des revendications 1 à 4, ce pourcentage étant exprimé en additif sec par rapport à la production massique de papier, l'additif cationique étant introduit sous forme de colle aqueuse diluée de concentration inférieure à 2% et, de préférence, inférieure à 1%.

## Patentansprüche

1. Kationisches Additiv für die Masse in der Papierherstellung, dadurch gekennzeichnet, dass es ein Gemisch aus wenigstens einer kationischen Getreidestärke und wenigstens einer kationischen Wurzelknollenstärke umfasst, welches Gemisch einen Gehalt an fixiertem Stickstoff von mehr als 0,10%, vorzugsweise von mehr als 0,15%, bezogen auf das Trockengewicht der Stärke, aufweist, und wobei der Gehalt des Gemisches an kationischer Getreidestärke ausserdem zwischen 2 und 98 Gew.-% liegt.

2. Kationisches Additiv für die Masse in der Papierherstellung nach Anspruch 1, dadurch gekennzeichnet, dass der Anteil der Getreidestärke in dem Gemisch zwischen 5% und 95%, vorzugsweise zwischen 10% und 90%, liegt.

3. Kationisches Additiv für die Masse in der Papierherstellung nach Anspruch 1 oder 2, dadurch gekennzeichnet, dass die Getreidestärke aus Weizenstärke oder Maisstärke ausgewählt ist und dass die Wurzelknollenstärke aus Kartoffelstärke besteht.

4. Kationisches Additiv für die Masse in der Papierherstellung nach einem der Ansprüche 1 bis 3, dadurch gekennzeichnet, dass die Stärken mit stickstoffhaltigen Reaktionskomponenten auf der Basis von primären Aminen oder quaternären Ammoniumsalzen kationisiert worden sind.

5. Verfahren zur Herstellung eines kationischen Additivs für die Masse in der Papierherstellung, dadurch gekennzeichnet, dass man ein Gemisch aus wenigstens einer Getreidestärke und aus wenigstens einer Wurzelknollenstärke kationisiert, wobei diese Mengen an Reaktionskomponenten derart ausgewählt werden, dass die entstandenen kationischen Stärken einen Gehalt an fixiertem Stickstoff von mehr als 0,10%, vorzugsweise mehr als 0,15%, bezogen auf das Trockengewicht der Stärke, aufweisen und dass der Gehalt des entstandenen Gemisches an kationischer Getreidestärke überdies zwischen 2 und 98 Gew.-% liegt.

6. Verfahren nach Anspruch 5, dadurch gekennzeichnet, dass die Obergrenze für den Gehalt an fixiertem Stickstoff nahe bei 1% liegt.

7. Verfahren zur Herstellung eines kationischen Additivs für die Masse in der Papierherstellung, dadurch gekennzeichnet, dass man getrennt wenigstens eine Wurzelknollenstärke einerseits und wenigstens eine Getreidestärke anderseits derart kationisiert, dass der Gehalt an fixiertem Stickstoff mehr als 0,10%, vorzugsweise mehr als 0,15%, bezogen auf das Trockengewicht der Stärke, beträgt und dass man diese beiden Sorten von kationischen Stärken entweder durch Trockenvermischen, oder durch Vermischen in der Milchphase, oder durch Vermischen von konzentrierten oder verdünnten wässrigen Leimen, die aus diesen kationischen Stärken erhalten worden sind, in solchen Mengenanteilen miteinander vereinigt, dass die kationische Getreidestärke 2 bis 98% des Gemisches ausmacht.

8. Verfahren zur Herstellung von Papier, dadurch gekennzeichnet, dass man zu dem Zellulosebrei eine Menge von 0,1% bis 4% des kationischen Additivs für die Masse in der Papierherstellung nach einem der Ansprüche 1 bis 4 hinzufügt, wobei dieser Prozentsatz als Trockengewicht des Additivs, bezogen auf die Massenproduktion des Papiers, ausgedrückt ist und wobei das kationische Additiv in der Form eines wässrigen verdünnten Leims eingebracht wird, dessen Konzentration unter 2% und vorzugsweise unter 1% liegt.

## Claims

1. Wet-end cationic additive for the manufacture of paper, characterized by the fact that it comprises a mixture of at least one cationic cereal starch and at least one cationic tuber starch having a ratio of fixed nitrogen with respect to dry starch higher than 0.10% and, preferably, higher than 0.15%, the proportion of cationic cereal starch in the mixture being comprised between 2% and 98% by weight.

2. Wet-end cationic additive for the manufacture of paper, characterized by the fact that the proportion of cereal starch in the mixture is comprised between 5% and 95% and, preferably, between 10% and 90%.

3. Wet-end cationic additive according to any of claims 1 and 2, characterized by the fact that the cereal starch is selected from among wheat or corn starches and that the tuber starch is constituted by potato starch.

4. Wet-end cationic additive according to one of claims 1 to 3, characterized by the fact that the starches were cationized by means of nitrogenous reagents based on primary amines or quaternary ammonium salts.

5. Process for the manufacture of a wet-end cationic additive for the manufacture of paper, characterized by the fact that there is cationized a mixture of at least one cereal starch and at least one tuber starch, the proportions of reagents being selected in such a way that the resulting cationic starches have a ratio of fixed nitrogen higher than 0.10%, preferably than 0.15% with respect to dry starch, the proportion of cationic cereal starch in the resulting mixture being comprised between 2% and 98% by weight.

6. Process according to claim 5, characterized by the fact that the higher limit of the ratio of fixed nitrogen is close to 1%.

7. Process for the manufacture of a wet-end cationic additive for the manufacture of paper, characterized by the fact that there is cationized separately at least one tuber starch on the one hand, and at least one cereal starch on the other hand in such a way that the ratio of fixed nitrogen is higher than 0.10%, preferably than 0.15% with respect to dry starch, the two types of cationic starches being combined either by mixing in the dry state, or by mixing in a milk phase, or by mixing concentrated or dilute aqueous glues obtained from these starches, in proportions such that the cationic cereal starch represents 2% to 98% of the mixture.

8. Process of manufacturing paper, characterized by the fact that there is added to the cellulose pulp a proportion of 0.1% to 4% of the wet-end cationic additive according to one of claims 1 to 4, this percentage being expressed in dry additive with respect to the production by weight of paper, the cationic additive being introduced in the form of a dilute aqueous glue having a concentration lower than 2% and preferably lower than 1%.

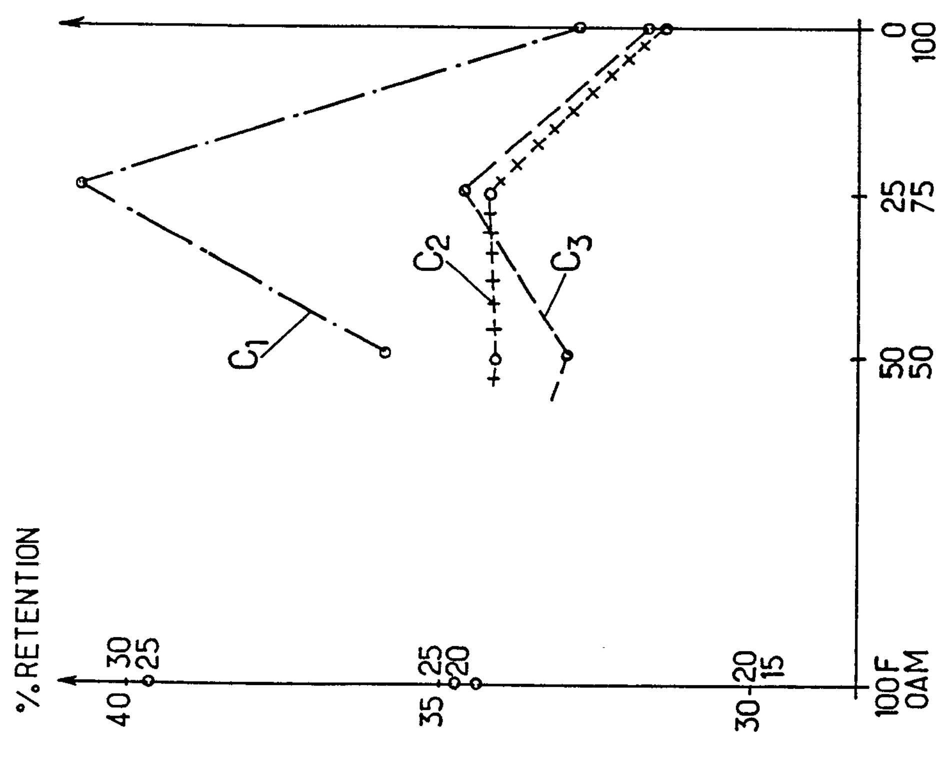
% RETENTION
40
30
25
35
25
20
30
20
15
100F
0AM
50
50
25
75
0
100
C1
C2
C3

Fig.1.

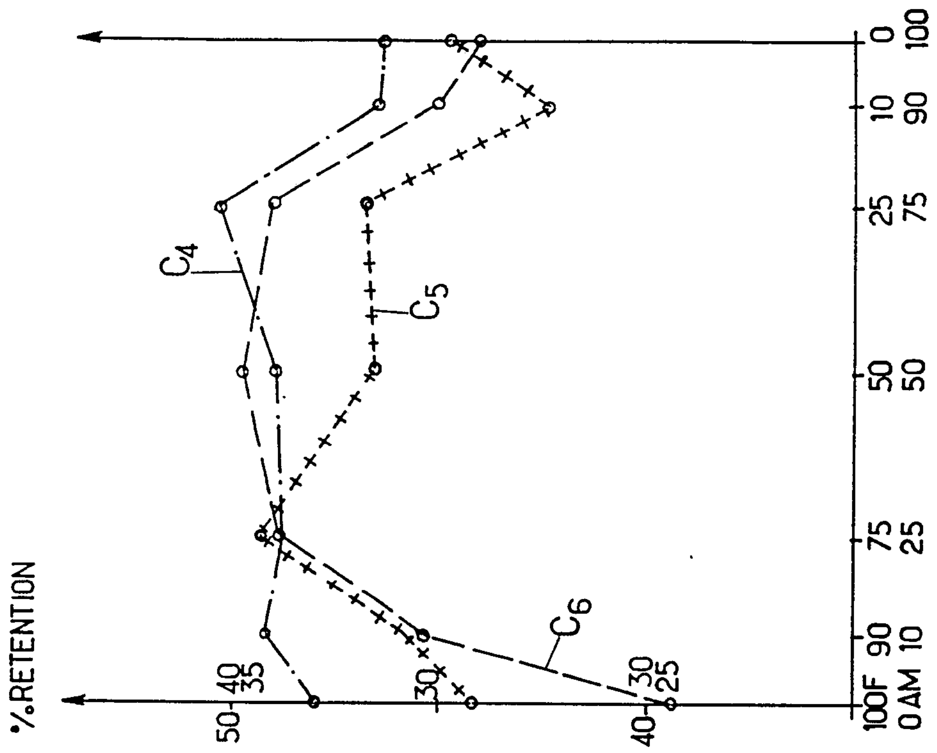
% RETENTION
50
40
35
30
40
30
25
100F
0AM
90
10
75
25
50
50
25
75
10
90
0
100
C4
C5
C6

Fig.2.

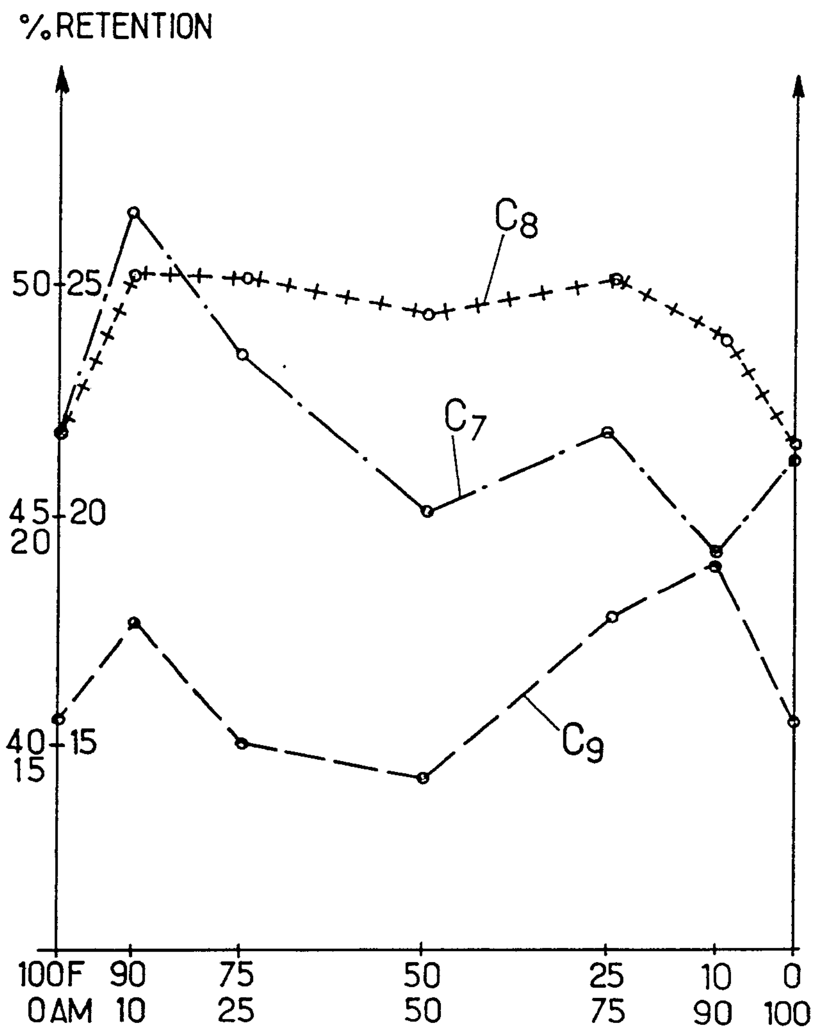

%RETENTION
C8
C7
C9
50-25
45-20
20
40-15
15
100F 90 75 50 25 10 0
0AM 10 25 50 75 90 100


Fig.3.